# EUROPEAN PATENT APPLICATION

(11) **EP 4 678 500 A1**
(43) Date of publication of application: **14.01.2026**
(21) Application number: 24306151.2
(22) Date of filing: 09.07.2024
(51) Int. Cl.: B61F 5/22, B61L 15/00, B61L 25/02, B60G 17/0165

(54) **SYSTEM AND METHOD FOR ADJUSTING THE FLOOR HEIGHT OF A PASSENGER TRANSPORTATION VEHICLE RELATIVE TO THE PLATFORM OF A STOPPING STATION, AND VEHICLE COMPRISING SUCH A SYSTEM**

(71) Applicant: SpeedInnov, 75008 Paris (FR)
(72) Inventor: SERVAJEAN, Olivier, 17000 LA ROCHELLE (FR); GIROS, Simon, 17220 SAINT CHRISTOPHE (FR)
(74) Representative: Plasseraud IP

(57) **Abstract**

System (1) for adjusting the height of the floor (204) of a passenger vehicle (200) relative to the platform level of a stopping station, the system comprising:
- an electronic controller (3);
- a positioning device (5) providing the electronic controller (3), with signals (S_{P}) indicative of the actual position of the passenger vehicle along a travel route. The electronic controller is configured to:
- receive the actual position of the passenger vehicle along the travel route based on the signals provided by the positioning device;
- calculate if the actual position of the passenger vehicle is within a predetermined distance from a platform station (202) at which the passenger vehicle is scheduled to stop; and,
- only when it is verified that the passenger vehicle is within the predetermined distance, issue a signal (Sc) to command, while the passenger vehicle is travelling, the adjustment of the floor height of the passenger vehicle relative to the level of the platform station where the passenger vehicle is going to arrive and stop.

## Description

The present invention relates to a system and a method for adjusting the height of the floor of a passenger transportation vehicle relative to the platform level of a stopping station, and to a passenger transportation vehicle comprising such a system.

The system and method according to the invention are particularly suitable for being applied to passenger trains, and in particular to railway cars adapted to transport physically impaired people, e.g. those using wheelchairs, and will be described by making specific reference to such application without intending in any way to limit their possible use with other types of passenger vehicles, e.g. public transportation buses.

As known, in public transportation networks, when a vehicle reaches a stopping point, such as a train reaches a platform station, it may happen that there is a certain difference in height between the level of the platform and that of the vehicle floor.

In such cases, boarding on/off of passenger may present some difficulties.

In order to cope with this issue, some trains are equipped with systems for adjusting the floor height during station stops.

These systems facilitate the access to or exit from vehicles by substantially levelling the threshold of the access doors with the platform, and are particularly necessary to enable people with reduced mobility, e.g. those using wheelchairs, to access or exit the train completely independently without any external assistance.

Although known solutions allow achieving their intended scope, there are still some aspects worth of further improvements.

In particular, in known solutions, the floor height is adjusted once the vehicle has reached and stopped at the platform station.

As a consequence, this adjustment has the disadvantage of delaying the authorization to open the access doors which will only be authorized to open when the access door threshold will be at the correct position relative to the platform level, thus causing an undesired downtime which negatively impact on the total travelling time especially in case of high speed trains.

Hence, the present invention is aimed at providing a solution capable of at least mitigating such issue.

Accordingly, this aim is achieved by system for adjusting the height of the floor of a passenger vehicle relative to the platform level of a stopping station, the system being characterized in that it comprises at least, suitable to be installed on board of the passenger vehicle:
- at least one electronic controller;
- at least one positioning device configured to provide the at least one electronic controller, with signals indicative of the actual position of the passenger vehicle along a travel route; wherein, the electronic controller is configured to:
- receive the actual position of the passenger vehicle along the travel route based on the signals provided by the at least one positioning device;
- calculate if the actual position of the passenger vehicle is within a predetermined distance from a platform station at which the passenger vehicle is scheduled to stop; and,
- only when it is verified that the passenger vehicle is within the predetermined distance from a platform station where the passenger vehicle is scheduled to stop, then issue a signal suitable to command, while the passenger vehicle is travelling, the adjustment of the floor height of the passenger vehicle relative to the level of the platform station where the passenger vehicle is going to arrive and stop.

This aim is also achieved by a method for adjusting the height of the floor of a passenger vehicle relative to the platform level of a stopping station, the method being characterized in that it comprises at least the following steps:
(a): providing signals indicative of the actual position of the passenger vehicle along a travel route;
(b): receiving the actual position of the passenger vehicle along the travel route based on the provided signals;
(c): calculating if the actual position of the passenger vehicle is within a predetermined distance from a platform station at which the passenger vehicle is scheduled to stop; and,
(d): only when it is verified that the passenger vehicle is within the predetermined distance from a platform station where the passenger vehicle is scheduled to stop, then issuing a signal suitable to command, while the passenger vehicle is travelling, the adjustment of the floor height of the passenger vehicle relative to the level of the platform station where the passenger vehicle is going to arrive and stop.

Preferred embodiments of the invention are specified in the dependent claims, the contents of which are to be understood as an integral part of this description.

Further characteristics and advantages will become apparent from the description of some preferred but not exclusive exemplary embodiments of a system and method according to the present disclosure, illustrated only by way of non-limitative examples with the accompanying drawings, wherein:
Figure 1 is an exemplary block diagram schematically illustrating a system for adjusting the height of the floor of a passenger vehicle relative to the platform level of a stopping station, according to the present invention;
Figure 2 is an exemplary flow chart schematically illustrating a method for adjusting the height of the floor of a passenger vehicle relative to the platform level of a stopping station, according to the present invention;
Figure 3 schematically shows a sequence of phases where the height of the floor of a passenger vehicle is adjusted relative to the platform level of a stopping station diagram, using the system or the method according to the invention.

It should be noted that in the detailed description that follows, identical or similar components, either from a structural and/or functional point of view, have the same reference numerals, regardless of whether they are shown in the same or different embodiments of the present invention; it should also be noted that in order to clearly and concisely describe the present invention, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

In addition, when the term "about" or "substantial" or "substantially" is used herein, it has to be understood as encompassing an actual variation of plus or minus 5% with respect to an indicated reference value, axis, time or position.

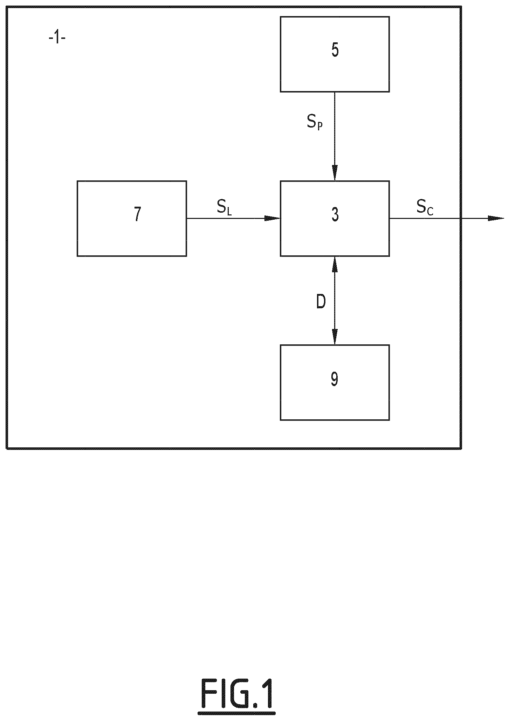

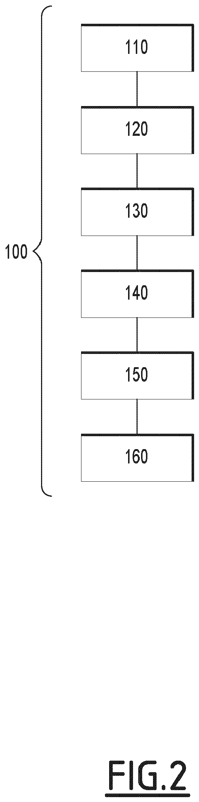

Figures 1 and 2 illustrate respective exemplary embodiments of a system 1 and a method 100 for adjusting the height of the floor of a passenger vehicle relative to the platform level of a stopping station.

The definition of passenger vehicle has to be interpreted hereby in the broadest sense and as including any type of public transportation vehicle, such as buses, trains etc., and formed by any number of units.

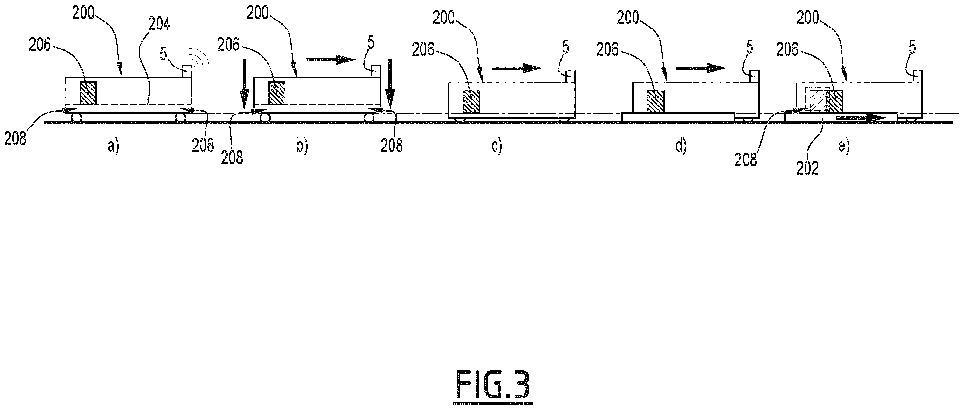

In the example of figure 3, for the sake of ease of illustration, a passenger vehicle is represented as a train car 200 which is approaching a platform 202 of a railway station.

As illustrated in figure 3, and according to solutions well known in the art or readily available to those skilled in the art and thus not described herein in details, the passenger vehicle 200 comprises a floor 204 where passenger can stand and/or move, one or more access/exit doors 206, and a suspension system 208, e.g. an electronically controlled pneumatic suspension system, schematically indicated in figure 3 inserts a) and b) with the reference number 208.

Clearly, the platform can be likewise a stop along a bus route.

As illustrated in figure 1, the system 1 comprises, suitable to be installed on board of the passenger vehicle 200, at least:
- at least one electronic controller 3;
- at least one positioning device 5 configured to provide the at least one electronic controller 3, with signals S_{P} indicative of the actual position of the passenger vehicle 200 along a travel route.

Conveniently, the electronic controller 3 is configured to:
- receive the actual position of the passenger vehicle along the travel route based on the signals S_{P} provided by the at least one positioning device 5;
- calculate if the actual position of the passenger vehicle 200 is within a predetermined distance from a platform station 202 at which the passenger vehicle 200 is scheduled to stop; and,
- only when it is verified that the passenger vehicle 200 is within the predetermined distance from said platform station 202 where the passenger vehicle 200 is scheduled to stop, then issue a signal Sc suitable to command, while the passenger vehicle 200 is travelling, the adjustment of the height of the floor 204 of the passenger vehicle 200 relative to the level of the platform station 202 where the passenger vehicle is going to arrive and stop.

In practice, according to the invention, the floor height of the passenger vehicle 200 is lowered or raised in advance so that, once the passenger vehicle 200 stops at the platform station 202, the threshold of the access door(s) 206 is substantially levelled with the level of the platform station 202.

In this way, the stopping time at any scheduled stop can be reduced with respect to known solutions.

If instead any approaching platform station along the route that the passenger vehicle 200 is travelling along is not a scheduled stop according to the travel schedule, then adjustment of the floor height is not performed.

The at least controller 3 can constituted by, or comprise, any suitable processor-based device, e.g. a microprocessor, microcontroller, a microcomputer, a programmable logic controller, an application specific integrated circuit, or any other programmable circuit, of a type commercially available, suitably programmed and provided to the extent necessary with circuitry, in order to perform the innovative functionalities devised for the system 1 according to the present invention.

Further, the at least one controller can be of concentrated or distributed type, i.e. it can be constituted by only one processor-based device, or by two or more processor-based devices collaboratively carrying out the various functionalities foreseen by the system 1 according to the invention

In one possible embodiment, the at least one positioning device 5 comprises a GPS receiver which is suitable to be installed onboard the passenger vehicle 200, e.g. on the roof, and is configured to receive from a GPS system external to the passenger vehicle 200 and to transmit to the at least one controller 3 signals indicative of the actual position of the passenger vehicle 200 along the travel path, which are then communicated via signal S_{P} to the at least one controller 3.

In one possible embodiment, the system 1 further comprises a data storage 9 configured to store at least data D indicative of the travel under execution by the passenger vehicle 200, said data being accessible by or provided to the at least one controller 3.

For example, the stored data comprise data about the planned travel under execution, i.e. scheduled stops, levels of the platforms of each scheduled stops, etc.

In one possible embodiment, once the passenger vehicle 200 has stopped at the scheduled platform station 202, the at least one electronic controller 3 is further configured to:
- compare the floor height of the passenger vehicle 200, once adjusted, with the level of the platform station 202;
- enable opening of one or more doors 206 of the passenger vehicle 200 only if the adjusted height of the floor 204 differs from the level of the platform station 202 at most of a predetermined threshold.

In particular, according to one possible embodiment, the system 1 further comprises one or more sensors 7, e.g. any suitable position or level sensors, configured to provide the at least one electronic controller 3 with signals S_{L} indicative of the actual floor height of the passenger vehicle 200.

In this way, data indicative of the level of the platform at which the passenger vehicle 200 has to stop can be retrieved by the at least controller 3 form the data storage 9.

The predetermined threshold can be, for example, a predefined range to take into account that the access threshold of the door(s) 206 may not be perfectly levelled with the level of the platform station 202, and can be at a slightly but still acceptable higher or lower position.

In this way, boarding/off boarding of passenger can be carried out with a higher safety.

In one possible embodiment, the at least one electronic controller 3 is configured to issue a signal Sc suitable to command modifying the pressure inside the pneumatic suspension system 208 to thereby modify the floor height of the passenger vehicle 200.

As previously indicated, figure 2 schematically shows a method 100 for adjusting the height of the floor 204 of a passenger vehicle 200 relative to the platform level of a stopping station, which can be carried out, for example, in connection with or by means of the components of the system 1.

As illustrated, the method 100 comprises at least the following steps:
- 110: providing for example via the at least one positioning device 5, signals S_{P} indicative of the actual position of the passenger vehicle 200 along a travel route; and, for example by means of the at least one controller 3:
- 120: receiving (see for instance insert a) in figure 3), the actual position of the passenger vehicle 200 along the travel route based on the provided signals S_{P};
   130: calculating (see for instance insert b) in figure 3) if the actual position of the passenger vehicle 200 is within a predetermined distance from a platform station 202 at which the passenger vehicle 200 is scheduled to stop; and,
- 140: only when it is verified that the passenger vehicle 200 is within the predetermined distance from a platform station 202 where the passenger vehicle 200 is scheduled to stop, then issuing(see for instance insert c) in figure 3) a signal Sc suitable to command, while the passenger vehicle 200 is travelling, the adjustment of the floor height 204 of the passenger vehicle 200 relative to the level of the platform station 202 where the passenger vehicle is going to arrive and stop.

In one possible embodiment, the method 100 further comprises:
- 150: comparing (see for instance insert d) in figure 3) the floor height of the passenger vehicle 200, once adjusted, with the level of the platform station 202 where the passenger vehicle 200 has stopped;
- 160: enabling (see for instance insert e) in figure 3) opening of one or more doors 206 of the passenger vehicle 200 only if the adjusted floor height 204 differs from the level of the platform station 202 at most of a predetermined threshold.

In one possible embodiment, the step of comparing 150 comprises providing signals S_{L} indicative of the actual height of the floor 204 of the passenger vehicle 200.

In yet a further possible embodiment, the step of issuing 140 comprises issuing a signal Sc suitable to command modifying the pressure inside the pneumatic suspension system 208 of the passenger vehicle 200 to thereby modify the height of the floor 204 of the passenger vehicle 200.

Hence, it is evident from the foregoing description that the system 1 and method 100 according to the present invention allow achieving the intended aim since they make possible reducing the waiting time at the stopping stations by substantially levelling the threshold of the access doors with the level of platform stations in advance, i.e. before the vehicle reaches and stops at such platforms.

These results are achieved according to a simple solution that can exploits components already installed onboard the passenger vehicle for other functionalities/purposes. Indeed, the at least one controller 3 can be constituted by the onboard general control system of the vehicle.

The system 1 and method 100 thus conceived are susceptible of modifications and variations, all of which are within the scope of the inventive concept as defined in particular by the appended claims; for example, the at least one positioning device 5 can be a device suitable to received signals other than GPS signals, e.g. a transponder suitable to communicate with balises placed along the travelling route, so as to receive signals indicative of the actual position of the passenger vehicle 200 along the travelling route, and to provide the controller 3 with corresponding signals indicative of such actual position

All the details may furthermore be replaced with technically equivalent elements.

## Claims

1. System (1) for adjusting the height of the floor (204) of a passenger vehicle (200) relative to the platform level of a stopping station, the system (1) being **characterized in that** it comprises at least, suitable to be installed on board of the passenger vehicle (200):
- at least one electronic controller (3);
- at least one positioning device (5) configured to provide the at least one electronic controller (3), with signals (S_{P}) indicative of the actual position of the passenger vehicle (200) along a travel route; wherein, the electronic controller (3) is configured to:
- receive the actual position of the passenger vehicle (200) along the travel route based on the signals (S_{P}) provided by the at least one positioning device (5);
- calculate if the actual position of the passenger vehicle (200) is within a predetermined distance from a platform station (202) at which the passenger vehicle (200) is scheduled to stop; and,
- only when it is verified that the passenger vehicle (200) is within the predetermined distance from a platform station (202) where the passenger vehicle (200) is scheduled to stop, then issue a signal (Sc) suitable to command, while the passenger vehicle (200) is travelling, the adjustment of the floor height (204) of the passenger vehicle (200) relative to the level of the platform station (202) where the passenger vehicle (200) is going to arrive and stop.

2. System (1) according to claim 1, wherein the at least one electronic controller (3) is further configured to:
- compare the floor height (204) of the passenger vehicle (200), once adjusted, with the level of the platform station (202) where the passenger vehicle has stopped;
- enable opening of one or more doors (206) of the passenger vehicle (200) only if the adjusted floor height differs from the level of the platform station (202) at most of a predetermined threshold.

3. System (1) according to claim 2, wherein it further comprises one or more sensors (7) configured to provide the at least one electronic controller (3) with signals (S_{L}) indicative of the actual floor height (204) of the passenger vehicle (200).

4. System (1) according to one or more of the previous claims, wherein the passenger vehicle (200) comprises an electronically controlled pneumatic suspension system (208), and wherein the at least one electronic controller (3) is configured to issue a signal (Sc) suitable to command modifying the pressure inside the pneumatic suspension system (208) to thereby modify the floor height of the passenger vehicle (200).

5. System (1) according to one or more of the previous claims, wherein it further comprises a data storage (9) configured to store at least data indicative of the travel under execution by the passenger vehicle (200), said data being accessible by or provided to the at least one controller (3).

6. System (1) according to one or more of the previous claims, wherein said at least one positioning device (5) comprises a GPS receiver which is suitable to be installed onboard the passenger vehicle (200) and is configured to receive from a GPS system external to the passenger vehicle (200) and to transmit to the at least one controller (3) said signals (S_{P}) indicative of the actual position of the passenger vehicle (200) along the travel path.

7. A passenger vehicle (200) comprising a system (1) according to one or more of the previous claims.

8. The passenger vehicle (200) according to claim 7, wherein the vehicle is part of or constitutes a passenger train.

9. Method (100) for adjusting the height of the floor (204) of a passenger vehicle (200) relative to the platform level of a stopping station, the method (100) being **characterized in that** it comprises at least the following steps:
(110): providing signals (S_{P}) indicative of the actual position of the passenger vehicle (200) along a travel route;
(120): receiving the actual position of the passenger vehicle (200) along the travel route based on the provided signals (S_{P});
(130): calculating if the actual position of the passenger vehicle (200) is within a predetermined distance from a platform station (202) at which the passenger vehicle (200) is scheduled to stop; and,
(140): only when it is verified that the passenger vehicle (200) is within the predetermined distance from a platform station (202) where the passenger vehicle (200) is scheduled to stop, then issuing a signal (Sc) suitable to command, while the passenger vehicle (200) is travelling, the adjustment of the floor height (204) of the passenger vehicle (200) relative to the level of the platform station (202) where the passenger vehicle is going to arrive and stop.

10. Method (100) according to claim 9, further comprising:
(150): comparing the floor height (204) of the passenger vehicle (200), once adjusted, with the level of the platform station (202) where the passenger vehicle has stopped;
(160): enabling opening of one or more doors (206) of the passenger vehicle (200) only if the adjusted floor height (204) differs from the level of the platform station (202) at most of a predetermined threshold.

11. Method (100) according to claim 10, wherein said step of comparing (150) comprises providing signals (S_{L}) indicative of the actual floor height of the passenger vehicle (200).

12. Method (100) according to one or more of claims 9 to 11, wherein said step of issuing (140) comprises issuing a signal (Sc) suitable to command modifying the pressure inside a pneumatic suspension system (208) of the passenger vehicle (200) to thereby modify the height of the floor (204) thereof.
